# EUROPÄISCHE PATENTANMELDUNG

(11) **EP 4 455 240 A1**
(43) Veröffentlichungstag der Anmeldung: **30.10.2024**
(21) Anmeldenummer: 24171177.9
(22) Anmeldetag: 19.04.2024
(51) Int. Cl.: C09J 7/26, C09J 7/38, C09J 133/04, C09J 163/00, C09J 5/00

(54) **REAKTIVES HAFTKLEBEELEMENT**

(30) Priorität: 25.04.2023 DE 102023110590
(71) Anmelder: tesa SE, 22848 Norderstedt (DE)
(72) Erfinder: KRAMP, Stefan, Norderstedt (DE); EGGER, Michael, Norderstedt (DE)
(74) Vertreter: tesa SE

(57) **Zusammenfassung**

Die Erfindung betrifft ein reaktives Haftklebeelement (10), umfassend i) eine Trägerschicht (12), ii) eine auf der Trägerschicht (12) angeordnete erste Klebeschicht (14), wobei die erste Klebeschicht (14) eine erste UV-aushärtbare Haftklebemasse umfasst, und iii) eine auf der von der ersten Klebeschicht (14) abgewandten Seite der Trägerschicht (12) angeordnete zweite Klebeschicht (16), wobei die zweite Klebeschicht (16) eine zweite UV-aushärtbare Haftklebemasse umfasst, wobei die erste UV-aushärtbare Haftklebemasse und die zweite UV-aushärtbare Haftklebemasse unabhängig voneinander bezogen auf die Masse der jeweiligen Haftklebemasse umfassen: x) eine oder mehrere Poly(meth)acrylat-Verbindungen in einem kombinierten Massenanteil im Bereich von 35 bis 85 %, y) eine oder mehrere polymerisierbare Epoxidverbindungen in einem kombinierten Massenanteil im Bereich von 10 bis 50 %, und z) einen oder mehrere Photoinitatoren in einem kombinierten Massenanteil im Bereich von 0,1 bis 5 %,
wobei die Trägerschicht (12) einen Schaumträger umfasst, wobei der Schaumträger ein oder mehrere Polyolefine umfasst.

## Beschreibung

Die Erfindung betrifft ein reaktives Haftklebeelement und ein Verfahren zur Verbindung von zwei oder mehr Komponenten, insbesondere zur Befestigung eines Displays an einem Gehäuse, sowie ein damit verklebtes Substrat und ein Verfahren zur Auftrennung eines solchen verklebten Substrates. Offenbart wird zudem die Verwendung eines entsprechenden reaktiven Haftklebeelements zur Verklebung von zwei oder mehr Komponenten.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar.

Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die vom Fachmann auch als reaktive Klebebänder bezeichnet werden, wird eine aushärtbare Klebemasse eingesetzt. Entsprechende aushärtbare Klebemassen haben in dem für die Applikation vorgesehenen Zustand noch nicht ihren maximalen Vernetzungsgrad erreicht und können durch äußere Einflüsse ausgehärtet werden, indem die Polymerisation in der aushärtbaren Klebemasse initiiert und dadurch der Vernetzungsgrad erhöht wird. Hierbei verändern sich die mechanischen Eigenschaften der nunmehr ausgehärteten Klebemasse, wobei insbesondere die Oberflächenhärte und die Festigkeit zunehmen.

Aushärtbare Klebemassen sind im Stand der Technik bekannt und können aus chemischer Sicht sehr unterschiedliche Zusammensetzungen aufweisen. Diesen aushärtbaren Klebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Beispielhafte reaktive Klebemassen sind beispielsweise in der DE 102015222028 A1, EP 3091059 A1, EP 3126402 B1, EP 2768919 B1, DE 102018203894 A1, WO 2017174303 A1 und US 4661542 A offenbart. Beispiele für reaktive Haftklebeelemente sind beispielsweise auch in der US 2022/0251432 A1 offenbart.

Viele der aus dem Stand der Technik bekannten reaktiven Klebemassen sind inhärent nicht haftklebrig. Entsprechend sind die daraus hergestellten reaktiven Klebeelemente regelmäßig nicht selbstklebend. Durch die fehlende Haftklebrigkeit wird es für manche Anwendungen erschwert, die entsprechenden aushärtbaren reaktiven Klebeelemente vor und während der Aushärtung in der gewünschten Position an einem zu beklebenden Substrat zu platzieren und diese bei Bedarf auch wieder rückstandfrei zu entfernen, beispielsweise um den Sitz eines fehlerhaft positionierten Klebeelementes zu korrigieren. Entsprechend ist eine haftklebrige Charakteristik prinzipiell bevorzugt, insbesondere für den Einsatz entsprechender reaktiver Klebeelemente in der Elektronikindustrie.

Neben der vor allem anwendungstechnischen Erfordernissen der Haftklebrigkeit werden an doppelseitige reaktive Haftklebeelemente auch weitere grundlegende Anforderungen gestellt, die die Umsetzung der anwendungstechnischen Erfordernisse jedoch in vielen Fällen entgegenstehen. Neben einer vorteilhaften Haftklebrigkeit sollen die doppelseitigen reaktiven Haftklebeelemente insbesondere auch schnell und zuverlässig aushärtbar sein und nach der Aushärtung in einer belastbaren strukturellen Verklebung resultieren. Insbesondere im Bereich der Elektronikindustrie ist es dabei wichtig, dass die eingesetzten reaktiven Haftklebemassen zu den zu verklebenden Substraten, welche beispielsweise aus Kunststoff oder Metall bestehen, eine hohe chemische Verträglichkeit zeigen und die Substratoberflächen nicht in schädlicher Weise angreifen. Darüber hinaus wird angestrebt, dass der durch Verklebung mit solchen doppelseitigen reaktiven Haftklebeelementen hergestellte Klebeverbund vorteilhafte mechanische Eigenschaften aufweisen sollte, die die Belastbarkeit und Haltbarkeit der erzeugten Verklebung positiv beeinflussen.

Eine besondere Problematik, welche sich mit doppelseitige reaktive Haftklebeelementen im Stand der Technik ergibt, ist, dass die an sich vorteilhafte Haltbarkeit der erzeugten strukturellen Verklebung ab dem Zeitpunkt, in dem das so verklebte Substrat das Ende seiner Lebenszeit erreicht hat, zu einem Hindernis wird, welches der effektiven Wiederverwertung der Komponenten des verklebten Substrates im Wege stehen kann. Für ein unter ökologischen und ökonomischen Gesichtspunkten vorteilhaftes Recycling müssen die einzelnen Komponenten nämlich regelmäßig wieder voneinander separiert werden, bspw. ein Display von einem Kunststoffgehäuse, was bei ausgehärteten reaktiven Haftklebeelementen, die während der Lebensdauer der verklebten Substrate den hohen Anforderungen an die Verbundfestigkeit genügten, in vielen Fällen nicht oder zumindest nicht mit vertretbarem Aufwand möglich ist.

Die primäre Aufgabe der vorliegenden Erfindung war es, die Nachteile des Standes der Technik zu beseitigen oder zumindest zu verringern.

Insbesondere war es eine Aufgabe der vorliegenden Erfindung, ein beidseitiges Haftklebeelement anzugeben, welches haftklebrig ist, so dass es sich vor der Aushärtung im Wesentlichen Rückstandsfrei wieder von einem Substrat abziehen lässt, sodass eine zuverlässige Verarbeitung des anzugebenden reaktiven Haftklebeelementes sichergestellt wird.

Zudem war es eine Aufgabe der vorliegenden Erfindung, dass die anzugebenden reaktiven Haftklebeelemente über vorteilhafte klebtechnische Eigenschaften verfügen sollten, insbesondere auch bei erhöhten Temperaturen. Hierbei sollten die anzugebenden reaktiven Haftklebeelemente vor der Aushärtung insbesondere über eine vorteilhafte Klebkraft verfügen und zudem in schneller und zuverlässiger Weise aushärtbar sein, wobei es wünschenswert war, dass der nach Aushärtung resultierende Klebeverbund eine vorteilhafte Verbundfestigkeit aufweisen sollte.

Es war eine weitere Aufgabe der vorliegenden Erfindung, dass die anzugebenden reaktiven Haftklebeelemente eine hohe chemische Kompatibilität und Verträglichkeit mit den im Bereich der Elektronikindustrie typischerweise eingesetzten Substraten aufweisen sollten, wobei es insbesondere wünschenswert war, dass Substrate aus Kunststoff oder Metall nicht in unvorteilhafter Weise angegriffen werden.

Zudem sollten die anzugebenden reaktiven Haftklebeelemente nach der Aushärtung über ein vorteilhaftes mechanisches Eigenschaftsprofil verfügen, welches sich vorteilhaft auf die Haltbarkeit der erzeugten Verklebung auswirkt, insbesondere bei der Verklebung von Bauteilen im Bereich der Elektronikindustrie, beispielsweise bei der Befestigung von Displays in den entsprechenden Aufnahmen von Gehäusen.

Es war eine wichtige Aufgabe der vorliegenden Erfindung, dass die anzugebenden reaktiven Haftklebeelemente trotz einer vorteilhaften und langlebigen Verklebung einen Weg zu einer einfachen und effizienten Auftrennung der Verklebung eröffnen sollten, um auf diese Weise die Wiederverwertbarkeit von verklebten Substraten bzw. deren verklebter Komponenten zu ermöglichen, wobei diese vorteilhafte Auftrennbarkeit des Verbundes wünschenswerterweise ohne den Einsatz von potentiell gesundheitsschädlichen Chemikalien realisierbar sein sollte.

Zudem war es eine Aufgabe der vorliegenden Erfindung, ein Verfahren zur Verbindung von zwei oder mehr Komponenten und ein entsprechendes verklebtes Substrat anzugeben.

Darüber hinaus war es eine Aufgabe der vorliegenden Erfindung, ein Verfahren zur Auftrennung eines solchen verklebten Substrates anzugeben.

Es war eine sekundäre Aufgabe der vorliegenden Erfindung, eine Verwendung für die anzugebenden reaktiven Haftklebeelemente bei der Verklebung verschiedener Komponenten bereitzustellen.

Die Erfinder der vorliegenden Erfindung haben nunmehr gefunden, dass sich die vorstehend beschriebenen Aufgaben lösen lassen, wenn ein beidseitiges, reaktives Haftklebeelement bereitgestellt wird, dessen Klebeschichten jeweils eine auf Poly(meth)acrylat-Verbindungen und Epoxid-Verbindungen basierende, UV-aushärtbare Haftklebemasse aufweisen, wenn in der Trägerschicht des reaktiven Haftklebeelements ein Polyolefinschaum eingesetzt wird, wie es in den Ansprüchen definiert ist.

Entsprechende reaktive Haftklebeelemente weisen in vorteilhafter Weise eine vorteilhafte Haftklebrigkeit in Kombination mit einer günstigen Grenzflächenadhäsion zwischen dem spezifischen ausgewählten Schaumträger und der chemisch gezielt darauf abgestimmten Haftklebemasse. Die entsprechenden reaktiven Haftklebeelemente lassen sich dank der UV-Aushärtbarkeit schnell und zuverlässig aushärten und zeigen dabei eine ausgezeichnete Verklebungsleistung. Durch die Kombination der spezifischen Haftklebemassen mit dem Polyolefinschaum wird nach der Aushärtung ein Klebeverbund mit ausgezeichneten mechanischen Eigenschaften erhalten, die eine vorteilhafte Langlebigkeit der erzeugten Verklebung unterstützen.

In synergistischer Weise eröffnen entsprechende reaktive Haftklebeelemente trotz dieser vorteilhaften klebtechnischen Eigenschaften einen Weg zu einer einfachen und effizienten Auftrennung der Verklebung. Die ausgehärteten reaktiven Haftklebeelemente können nämlich bedingt durch die spezifische Ausgestaltung der Trägerschicht besonders leicht und zuverlässig entlang der Trägerschicht aufgetrennt bzw. aufgespalten werden, um dadurch die erzeugte Verklebung mechanisch aufzutrennen. Hierbei erreichen die entsprechenden reaktiven Haftklebeelemente ein vorteilhaftes Maß der Auftrennbarkeit, welches nach Einschätzung der Erfinder mit den aus dem Stand der Technik bekannten reaktiven Haftklebeelementen nicht erreicht werden kann. Mit anderen Worten ist die effiziente mechanische Trennung von bereits verklebten Bauteilen zum Zwecke des Recyclings oder des Ersetzens von defekten Bauteilen, welche durch die entsprechenden reaktiven Haftklebeelemente ermöglicht wird, ein besonders großer Vorteil der entsprechenden dieses reaktiven Haftklebeelemente.

Durch das entsprechende Eigenschaftsprofil eignen sich die entsprechenden reaktive Haftklebeelemente in besonderer Weise für den Einsatz in der Elektronikindustrie, insbesondere zur Verklebung von Displays in Gehäusen, wie es beispielsweise in der Fertigung von mobilen Endgeräten erfolgt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren, verklebter Substrate und Verwendungen ergeben sich aus den Merkmalen bevorzugter reaktiver Haftklebebänder.

Insoweit nachfolgend für ein Element, beispielsweise für die Poly(meth)acrylat-Verbindungen oder den Schaumträger, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft insbesondere ein reaktives Haftklebeelement, umfassend:
i) eine Trägerschicht,
ii) eine auf der Trägerschicht angeordnete erste Klebeschicht, wobei die erste Klebeschicht eine erste UV-aushärtbare Haftklebemasse umfasst, und
iii) eine auf der von der ersten Klebeschicht abgewandten Seite der Trägerschicht angeordnete zweite Klebeschicht, wobei die zweite Klebeschicht eine zweite UV-aushärtbare Haftklebemasse umfasst,
wobei die erste UV-aushärtbare Haftklebemasse und die zweite UV-aushärtbare Haftklebemasse unabhängig voneinander bezogen auf die Masse der jeweiligen Haftklebemasse umfassen:
x) eine oder mehrere Poly(meth)acrylat-Verbindungen in einem kombinierten Massenanteil im Bereich von 35 bis 85 %,
y) eine oder mehrere polymerisierbare Epoxidverbindungen in einem kombinierten Massenanteil im Bereich von 10 bis 50 %, und
z) einen oder mehrere Photoinitatoren in einem kombinierten Massenanteil im Bereich von 0,1 bis 5 %,
wobei die Trägerschicht einen Schaumträger umfasst, wobei der Schaumträger ein oder mehrere Polyolefine umfasst.

Die erfindungsgemäßen reaktiven Haftklebeelemente sind insbesondere für die Verklebung von Komponenten elektronischer Bauteile besonders geeignet.

Die vorstehende Bezeichnung als Haftklebeelement bringt zum Ausdruck, dass die Form entsprechender erfindungsgemäßer reaktiver Haftklebeelemente prinzipiell frei gewählt werden kann, so dass beispielsweise auch doppelseitige Haftklebeelemente in der Form von Stanzlingen denkbar sind. Von besonderer Relevanz sind in der Praxis jedoch reaktive Haftklebebänder. Bevorzugt ist entsprechend auch ein erfindungsgemäßes reaktives Haftklebeelement, wobei das reaktive Haftklebeelement ein Haftklebeband ist.

Der Begriff Haftklebeband ist für den Fachmann im Bereich der Klebetechnik klar. Im Rahmen der vorliegenden Erfindung bezeichnet der Ausdruck Band alle dünnen, länglichen und flächigen Gebilde, d.h. Gebilde mit einer überwiegenden Ausdehnung in zwei Dimensionen mit ausgedehnter Länge und begrenzter Breite sowie entsprechende Bandabschnitte.

Das erfindungsgemäße reaktive Haftklebeelement umfasst eine Trägerschicht, welche nach Art eines doppelseitigen Klebebandes beidseitig von Klebeschichten bedeckt ist. Insbesondere zur Verbesserung der Handhabungseigenschaften können auf den beiden Klebeschichten zudem geeignete Trennschichten, beispielsweise Trennliner aus silikonisierten PET-Folien angeordnet sein, wodurch insbesondere die Lagerung in der Form von Rollen erleichtert wird. In diesem Fall handelt es sich um ein erfindungsgemäßes reaktives Haftklebeelement, wobei das reaktive Haftklebeelement zusätzlich umfasst:
iv) eine auf der ersten Haftklebeschicht angeordnete erste Trennschicht, bevorzugt eine Trennschicht aus Polyester, insbesondere Polyethylenterephthalat, wobei die Trennschicht bevorzugt eine Release-Beschichtung aufweist, und/oder
v) eine auf der zweiten Haftklebeschicht angeordnete zweite Trennschicht, bevorzugt eine Trennschicht aus Polyester, insbesondere Polyethylenterephthalat, wobei die Trennschicht bevorzugt eine Release-Beschichtung aufweist.

Bevorzugt besteht das erfindungsgemäße reaktive Haftklebeelement aus den vorstehend bezeichneten Bestandteilen.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Aus dem Stand der Technik bekannte übliche Materialien für Trägerschichten von doppelseitigen Haftklebebändern sind beispielsweise Gewebe, Gelege und Kunststofffolien, zum Beispiel PET-Folien.

Im Rahmen der vorliegenden Erfindung wird im Unterschied hierzu eine Trägerschicht eingesetzt, welche einen Schaumträger umfasst, welcher wiederum ein oder mehrere Polyolefine umfasst. Ein Schaum ist in Übereinstimmung mit dem fachmännischen Verständnis ein dreidimensionales Gebilde aus gasgefüllten Zellen, welche durch feste Zellstege begrenzt werden und welche in einem solchen Anteil vorliegen, dass die Dichte des Schaums gegenüber der Dichte des Matrixmaterials, also der Gesamtheit der nicht gasförmigen Materialien, aus denen das Material aufgebaut ist, verringert ist, bevorzugt um 30 % oder mehr, besonders bevorzugt um 50 % oder mehr.

Die Kombination aus der Schaumstruktur mit der spezifischen Materialauswahl der Polyolefine hat sich in Verbindung mit den spezifischen Haftklebemassen überraschenderweise als besonders vorteilhaft erwiesen. Nach Einschätzung der Erfinder resultiert der Einsatz eines Polyolefinschaums in der Trägerschicht in einem reaktiven Haftklebeelement, welches nach der Aushärtung in einer Verklebung mit vorteilhaften Mechanischen Eigenschaften resultiert. Ohne an diese Theorie gebunden sein zu wollen gehen die Erfinder davon aus, dass dies zumindest teilweise auf die Dämpfung von mechanischen Belastungen zurückzuführen ist, die durch den Schaumträger erreicht werden kann. In vorteilhafter Weise zeigen sich dabei mit den spezifischen Haftklebemassen der vorliegenden Erfindungen sehr vorteilhafte Verbundfestigkeiten an der Grenzfläche des Schaumes.

Als besonders großer Vorteil erweist sich jedoch der überraschende Befund, dass es der Einsatz des spezifischen Schaumträgers ermöglicht, das ausgehärtete reaktive Klebelement durch den Schaumträger hindurch, d.h. orthogonal zur Dickenrichtung des Klebelements bzw. zur Verbindungsachse zwischen den verklebten Komponenten bzw. parallel zur Flächenausdehnung des reaktiven Klebelements aufzutrennen, um die zuvor erzeugte strukturelle Verklebung aufzulösen. Diese vorteilhafte Möglichkeit, welche nach Einschätzung der Erfinder mit anderen Trägerschichten, welche keinen Schaumträger umfassen, nicht in gleicher Weise besteht, kann beispielsweise durch eine Schneidwerkzeug in der Form einer Klinge oder eines Drahtes, bevorzugt eines Drahtes, genutzt werden und ermöglicht es, die zuvor verklebten Komponenten schnell und effizient voneinander zu trennen, um diese getrennt voneinander beispielsweise einem Recycling zuzuführen.

Der Fachmann versteht, dass die Trägerschicht zumindest theoretisch neben dem Schaumträger auch weitere Bestandteile umfassen kann. Beispielsweise kann die Trägerschicht mehrlagig aufgebaut sein, wobei beispielsweise zwischen zwei Schaumträgern eine Verbindungslage vorgesehen wird. Besonders bevorzugt ist mit Blick auf eine effiziente Herstellung und ein vorteilhaftes Leistungsprofil jedoch der Einsatz einer Trägerschicht, welche überwiegend, bevorzugt im Wesentlichen vollständig, aus dem Schaumträger ausgebildet ist. Bevorzugt ist mit anderen Worten ein erfindungsgemäßes reaktives Haftklebeelement, wobei die Trägerschicht aus dem Schaumträger besteht.

Der erfindungsgemäß einzusetzende Schaumträger ist ein Schaum, genauer ein Kunststoffschaum, dessen Schaumstruktur entsprechend aus Kunststoff besteht. Dieser Kunststoff wird im Rahmen der vorliegenden Erfindung dahingehend spezifiziert, dass der Schaumträger im Schaummaterial ein oder mehrere Polyolefine, beispielsweise Polyethylen, umfassen muss, da sich entsprechende Polyolefine für die Erreichung der erfindungsgemäßen Vorteile als wesentlich erwiesen haben, insbesondere in Abgrenzung zu anderen Kunststoffschäumen aus beispielsweise Polyacrylaten oder Polyurethanen.

Der Fachmann versteht, dass in dem Kunststoffmaterial prinzipiell auch weitere (Co-)Polymere vorliegen können, welche mit den Polyolefine verblendet sein können oder dass der geschäumte Kunststoff Additive umfasst, mit denen die Eigenschaften des Kunststoffes gezielt auf die Anwendungserfordernisse eingestellt werden können. Im Lichte der identifizierten vorteilhaften Korrelation zwischen den Polyolefinen im Schaumträger und den spezifischen Haftklebemassen versteht der Fachmann jedoch, dass es bevorzugt ist, den Schaumträger zumindest überwiegend, bevorzugt weit überwiegend, insbesondere bevorzugt im Wesentlichen vollständig aus Polyolefinen auszubilden. Bevorzugt ist entsprechend ein erfindungsgemäßes reaktives Haftklebeelement, wobei der Schaumträger zu einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt im Wesentlichen vollständig, aus dem einen oder den mehreren Polyolefinen besteht, bezogen auf die Masse des Schaumträgers.

Nach Einschätzung der Erfinder sind für den Schaumträger prinzipiell alle industriell relevanten Polyolefine geeignet, da diese sich hinsichtlich vieler relevanter Eigenschaften insbesondere hinsichtlich der Polarität der Polymere prinzipiell ähneln. Jedoch ist es den Erfindern gelungen, besonders geeignete Polyolefinen für den Schaumträger zu identifizieren, mit denen sich in der Praxis ein besonders vorteilhaftes Leistungsprofil ergibt, wobei nach Einschätzung der Erfinder insbesondere Schaumträger aus Polyethylen in besonders vorteilhaften erfindungsgemäßen reaktiven Haftklebeelementen resultieren. Bevorzugt ist nämlich ein erfindungsgemäßes reaktives Haftklebeelement, wobei das eine oder die mehreren Polyolefine ausgewählt sind aus der Gruppe bestehend aus Polyethylen, Polypropylen, Polyisobutylen, Polybutylen und Polymethylpenten, bevorzugt ausgewählt sind aus der Gruppe bestehend aus Polyethylen und Polypropylen, besonders bevorzugt Polyethylen, wobei der Schaumträger besonders bevorzugt aus Polyethylen besteht.

Auch wenn sich nach Einschätzung der Erfinder prinzipiell auch mit offenporigen Schäumen akzeptabel Ergebnisse erzielen lassen, erachten die Erfinder insbesondere den Einsatz von geschlossenporigen Schäumen als Vorteilhaft. Bevorzugt ist entsprechend ein erfindungsgemäßes reaktives Haftklebeelement, wobei der Schaumträger ein geschlossenporiger Schaum ist.

Den Erfindern ist es gelungen, für den Schaumträger einen Grad der Schäumung zu identifizieren, mit dem sich insbesondere eine vorteilhafte Auftrennbarkeit erhalten lässt. Bevorzugt ist nämlich ein erfindungsgemäßes reaktives Haftklebeelement, wobei der Schaumträger eine Dichte im Bereich von 200 bis 600 kg/m³, bevorzugt im Bereich von 250 bis 550 kg/m³, besonders bevorzugt im Bereich von 300 bis 500 kg/m³, ganz besonders bevorzugt im Bereich von 350 bis 450 kg/m³, aufweist. Bevorzugt ist zusätzlich oder alternativ auch ein erfindungsgemäßes reaktives Haftklebeelement, wobei der Schaumträger ein Flächengewicht im Bereich von 50 bis 250 g/m², bevorzugt im Bereich von 80 bis 200 g/m², besonders bevorzugt im Bereich von 100 bis 150 g/m², aufweist.

Ein Parameter, über den sich nach Einschätzung der Erfinder Schaumträger charakterisieren lassen, die insbesondere für die Verarbeitung mit mechanischen Schneidwerkzeugen, beispielsweise Schneidmessern, geeignet sind und zudem nach der Verklebung ein vorteilhaftes Dämpfungsverhalten zeigen, welches insbesondere für die Verklebung von Displays geeignet ist, ist die Stauchhärte des Schaumträgers. Bevorzugt ist dabei ein erfindungsgemäßes reaktives Haftklebeelement, wobei der Schaumträger eine Stauchhärte im Bereich von 300 bis 900 kPa, bevorzugt im Bereich von 350 bis 850 kPa, besonders bevorzugt im Bereich von 450 bis 750 kPa, ganz besonders bevorzugt im Bereich von 550 bis 650 kPa, aufweist, bestimmt gemäß DIN 53577-1988-12, bevorzugt bei einer Verformung von 25 %. Nach Einschätzung der Erfinder ergeben sich mit entsprechenden Stauchhärten zudem besonders vorteilhafte Auftrennbarkeiten der resultierenden Verklebung und damit reaktive Haftklebeelement, deren Verwendung in verklebten Substraten resultiert, die sich am Ende der Lebensdauer besonders effizient wiederverwerten lassen.

Auf der Trägerschicht, bevorzugt unmittelbar auf dem Schaumträger, ist beidseitig jeweils eine Klebeschicht angeordnet. Diese Klebeschichten umfassen dabei jeweils eine Haftklebemasse, die dem reaktiven Haftklebeelement die Haftklebrigkeit verleiht.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 A1 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G` und G" jeweils zumindest zum Teil im Bereich von 10³ bis 10⁷ Pa liegen.

Der Fachmann versteht, dass die Klebeschichten neben der Haftklebemasse zumindest prinzipiell auch weitere Bestandteile umfassen kann, wobei insbesondere Füllstoffe zur Einstellung der mechanischen Eigenschaften in Frage kommen, wie sie nachfolgend offenbart werden. Insoweit ist es aber für im Wesentlichen alle Ausführungsformen bevorzugt, wenn die Klebeschichten möglichst weitgehend aus den entsprechenden Haftklebemassen bestehen. Für im Wesentlichen alle Ausführungsformen bevorzugt ist entsprechend ein erfindungsgemäßes reaktives Haftklebeelement, wobei die erste Haftklebeschicht zu einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt im Wesentlichen vollständig, aus der ersten UV-aushärtbaren Haftklebemasse besteht. Für im Wesentlichen alle Ausführungsformen bevorzugt ist zusätzlich oder alternativ, bevorzugt zusätzlich ein erfindungsgemäßes reaktives Haftklebeelement, wobei die zweite Haftklebeschicht zu einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt im Wesentlichen vollständig, aus der zweiten UV-aushärtbaren Haftklebemasse besteht, wobei insbesondere bevorzugt für beide Klebeschichten der Klebemassen die gleichen Untergrenzen der Massenanteile eingestellt werden.

Die in der ersten und zweiten Klebeschicht jeweils eingesetzten Haftklebemassen sind UV-aushärtbare Haftklebemasse. Dies bedeutet, dass es sich bei den eingesetzten UV-aushärtbaren Haftklebemassen, um solche Klebemassen handelt, die durch die von einer UV-Strahlungsquellen, bspw. einer UV-LED, emittierte Strahlung aushärtbar ist, d.h. um eine Klebemasse, in der eine UV-strahlungsbasierte Aktivierung zu einer Vernetzung der Bestandteile der Haftklebemasse führt. Durch die Möglichkeit zur Härtung kann die aushärtbare Klebemasse nach der Härtung bevorzugt als Strukturklebstoff fungieren. Nach DIN EN 923:2016-03 sind Strukturklebstoffe nachweisbar geeignet zur Herstellung lasttragender Konstruktionen, bei denen die Klebverbindung über längere Zeiträume mit einem hohen Prozentwert der maximalen Bruchkraft ohne Versagen beansprucht werden kann (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen. Bevorzugt sind die UV-aushärtbaren Haftklebemassen durch Bestrahlung mit elektromagnetischer Strahlung mit einer Wellenlänge im Bereich von 100 bis 400 nm, bevorzugt im Bereich von 200 bis 390 nm, besonders bevorzugt im Bereich von 300 bis 380 nm, insbesondere bevorzugt im Bereich von 350 bis 370 nm, aushärtbar. Die strahleninduzierte Aushärtung bei Raumtemperatur hat für eine Verklebung den Vorteil, dass sie dazu geeignet ist, temperaturempfindliche Komponenten mit unterschiedlichen Ausdehnungskoeffizienten mit geringem Aufwand und Energieeinsatz effizient zusammenzufügen.

UV-aushärtbare Klebemassen und die zugrundeliegenden physikalisch-chemischen Zusammenhänge sind dem Fachmann im Bereich der Klebtechnik prinzipiell bekannt. Die UV-Aushärtbarkeit der erfindungsgemäß einzusetzenden UV-aushärtbaren Haftklebemassen wird im vorliegenden Fall durch den Einsatz polymerisierbarer Verbindungen in Kombination mit einem entsprechenden Photoinitiator sichergestellt.

Die UV-aushärtbare Haftklebemassen werden im Rahmen der vorliegenden Erfindung über die jeweiligen Bestandteile und deren Massenanteile definiert. Diese Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge.

Beispielsweise kann die UV-aushärtbare Haftklebemasse als polymerisierbare Epoxidverbindung ausschließlich eine bestimmte Art eines Diglycidylethers umfassen, was bedeuten würde, dass die UV-aushärtbare Haftklebemasse eine Vielzahl der entsprechenden Moleküle umfasst.

In üblicher Weise werden die Massenanteile als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt, wobei jeweils - sofern nicht anders angegeben - die Masse der aushärtbaren Klebemasse das Bezugssystem ist.

Der Fachmann versteht, dass das reaktive Haftklebeelement prinzipiell auf beiden Seiten auch mit unterschiedlichen Haftklebemassen beschichtet sein können. Entsprechend sind die erste UV-aushärtbare Haftklebemasse und die zweite UV-aushärtbare Haftklebemasse hinsichtlich ihrer Zusammensetzung prinzipiell unabhängig voneinander. Insbesondere unter fertigungstechnischen Gesichtspunkten ist es jedoch bevorzugt, wenn die erste Klebeschicht und die zweite Klebeschicht, beziehungsweise die jeweiligen Haftklebemassen, im Wesentlichen identisch ausgebildet sind. Bevorzugt ist entsprechend ein erfindungsgemäßes reaktives Haftklebeelement, wobei die erste UV-aushärtbare Haftklebemasse und die zweite UV-aushärtbare Haftklebemasse identisch sind.

Den Erfindern der vorliegenden Erfindung ist es gelungen, für die Massenanteile der eingesetzten Komponenten besonders bevorzugte Bereiche zu identifizieren, mit denen sich insbesondere besonders vorteilhafte klebtechnische Eigenschaften realisieren lassen. Hierbei ist es bevorzugt, wenn für die erste UV-aushärtbare Haftklebemasse und die zweite UV-aushärtbare Haftklebemasse, korrespondierende Bereiche eingestellt werden. Bevorzugt ist vor diesem Hintergrund ein erfindungsgemäßes reaktives Haftklebeelement, wobei die erste UV-aushärtbare Haftklebemasse und die zweite UV-aushärtbare Haftklebemasse unabhängig voneinander bezogen auf die Masse der jeweiligen Haftklebemasse umfassen:
x.b) eine oder mehrere Poly(meth)acrylat-Verbindungen in einem kombinierten Massenanteil im Bereich von 45 bis 80 %, bevorzugt im Bereich von 50 bis 80 %, besonders bevorzugt im Bereich von 55 bis 75 %, ganz besonders bevorzugt im Bereich von 60 bis 70 %, und/oder
y.b) eine oder mehrere polymerisierbare Epoxidverbindungen in einem kombinierten Massenanteil im Bereich von 15 bis 45 %, bevorzugt im Bereich von 20 bis 40 %, besonders bevorzugt im Bereich von 25 bis 35 %, und/oder
z.b) einen oder mehrere Photoinitatoren in einem kombinierten Massenanteil im Bereich von 0,2 bis 2 %, bevorzugt im Bereich von 0,3 bis 1 %.

In den UV-aushärtbaren Haftklebemassen können neben den vorstehenden Bestandteilen auch weitere Bestanteile eingesetzt werden, wodurch sich in vorteilhafter Weise die physikalisch-chemischen Eigenschaften der UV-aushärtbaren Haftklebemassen einstellen lassen. Beispielhaft ist ein erfindungsgemäßes reaktives Haftklebeelement, wobei die erste UV-aushärtbare Haftklebemasse und die zweite UV-aushärtbare Haftklebemasse unabhängig voneinander bezogen auf die Masse der jeweiligen Haftklebemasse umfassen:
u) ein oder mehrere Klebharze in einem kombinierten Massenanteil im Bereich von 1 bis 25 %, bevorzugt im Bereich von 2 bis 20 %, besonders bevorzugt im Bereich von 5 bis 15 %, und/oder
v) ein oder mehrere Offenzeitadditive in einem kombinierten Massenanteil im Bereich von 0,1 bis 5 %, bevorzugt im Bereich von 0,2 bis 2 %, das eine oder die mehreren Offenzeitadditive Etherverbindungen sind, bevorzugt ausgewählt aus der Gruppe bestehend aus Polyolen und Kronenethern, und/oder
w) ein oder mehrere weitere Additive in einem kombinierten Massenanteil im Bereich von 0,1 bis 25 %, bevorzugt im Bereich von 0,2 bis 20 %, besonders bevorzugt im Bereich von 0,5 bis 15 %, wobei die weiteren Additive bevorzugt ausgewählt sind aus der Gruppe bestehend aus Verankerungsadditiven, Alterungsschutzmitteln, Lichtschutzmitteln, UV-Absorbern, rheologischen Additiven, Farbstoffen und Pigmenten.

In den Augen der Erfinder besonders geeignete UV-aushärtbare Haftklebemasse, welche sowohl als erste als auch als zweite UV-aushärtbare Haftklebemasse eingesetzt werden können, umfassen bezogen auf die Masse der UV-aushärtbare Haftklebemasse insbesondere die folgenden Bestandteile:
vv) ein oder mehrere Offenzeitadditive in einem kombinierten Massenanteil im Bereich von 0,1 bis 5 %,
ww) ein oder mehrere Verankerungsadditive in einem kombinierten Massenanteil im Bereich von 0,1 bis 5 %,
xx) eine oder mehrere Poly(meth)acrylat-Verbindungen in einem kombinierten Massenanteil im Bereich von 35 bis 85 %,
yy) eine oder mehrere polymerisierbare Epoxidverbindungen in einem kombinierten Massenanteil im Bereich von 10 bis 50 %, und
zz) einen oder mehrere Photoinitatoren in einem kombinierten Massenanteil im Bereich von 0,1 bis 5 %.

Auch wenn die UV-aushärtbaren Haftklebemassen weitere Bestandteile umfassen können, ist es nach Einschätzung der Erfinder bevorzugt, wenn die UV-aushärtbaren Haftklebemassen möglichst weitgehend aus den Bestandteilen x), y) und z) bestehen. Bevorzugt ist hierfür ein erfindungsgemäßes reaktives Haftklebeelement, wobei der kombinierte Massenanteil der Poly(meth)acrylat-Verbindungen, der polymerisierbare Epoxidverbindungen und der Photoinitatoren 80 % oder mehr, bevorzugt 90 % oder mehr, besonders bevorzugt 95 % oder mehr, beträgt, bezogen auf die Masse der jeweiligen UV-aushärtbaren Haftklebemasse.

Ein besonderer Fall von Additiven, welche der Einstellung der Eigenschaften von Haftklebemassen dienen, sind unlösliche Füllstoffe, die der Haftklebemasse zugesetzt werden können, um eine gefüllte Haftklebemasse zu erhalten. Bei diesen handelt es sich um partikuläre Füllstoffe mit einem mittleren Partikeldurchmesser (D50) von 5 µm oder mehr, bevorzugt 10 µm oder mehr, besonders bevorzugt 20 µm oder mehr, die in der Haftklebemasse nicht löslich sind und in dieser entsprechend als Dispersion vorliegen sowie um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramische Vollkugeln, mineralischen Hohlkugeln, mineralischen Vollkugeln und/oder Kohlenstoffvollkugeln. In Frage kommen als unlösliche Füllstoffe beispielsweise jedoch auch Fasern, Gelege, Plättchen und Stäbchen aus in der Haftklebemasse unlöslichen Materialien. Durch ihre teilweise schon makroskopischen Abmessungen und die fehlende Löslichkeit haben diese im Wesentlichen keinen Einfluss auf die vorstehend offenbarten Zusammenhänge der Zusammensetzungschemie der Haftklebemasse, sondern liegen vielmehr in heterogener Mischung mit der Haftklebemasse vor. Entsprechend werden diese unlöslichen Füllstoffe im Rahmen der vorliegenden Erfindung nicht der Haftklebemasse zugerechnet und werden entsprechend bei der Berechnung von Massenanteilen relativ zur Masse der Haftklebemasse nicht berücksichtigt. Im Rahmen der vorliegenden Erfindung wird vielmehr definiert, dass der Zusatz von unlöslichen Füllstoffen zu einer erfindungsgemäß einzusetzenden Haftklebemasse in einer gefüllten Haftklebemasse resultiert, d.h. einer gefüllten Haftklebemasse, umfassend:
p) eine Haftklebemasse, bevorzugt wie vorstehend als bevorzugt offenbart, und
q) einen oder mehrere unlösliche Füllstoffe.

Bevorzugt liegt der kombinierte Massenanteil der unlöslichen Füllstoffe dabei im Bereich von 1 bis 50 %, besonders bevorzugt im Bereich von 2 bis 40 %, ganz besonders bevorzugt im Bereich von 5 bis 30 %.

Aushärtbare Klebemassen sind dem Fachmann, wie vorstehend beschrieben, aus dem Stand der Technik umfassend bekannt, wobei auch die vorstehend angegebenen Einzelkomponenten dem Fachmann isoliert bekannt und in verschiedenen Variationen von zahlreichen verschiedenen Anbietern kommerziell erhältlich sind, wobei nachfolgend zudem bevorzugte und beispielhafte Vertreter für die einzelnen Komponenten offenbart werden.

Die UV-aushärtbaren Haftklebemassen umfassen insbesondere eine oder mehrere Poly(meth)acrylat-Verbindungen, d.h. (Co-)Polymere aus (Meth)acrylat-Verbindungen. Im Rahmen der vorliegenden Erfindung umfasst der Ausdruck "Poly(meth)acrylat" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis. Bevorzugt liegt der Massenanteil von Acrylsäureester und/oder Methacrylsäureester bei 50 % oder mehr, besonders bevorzugt 70 % oder mehr. Poly(meth)acrylate sind allgemein durch radikalische Polymerisation von Acryl- und/oder Methacryl-basierten Monomeren sowie gegebenenfalls weiteren copolymerisierbaren Monomeren zugänglich.

Die Herstellung solcher Poly(meth)acrylate aus den jeweiligen Monomeren kann nach den gängigen Verfahren erfolgen, insbesondere durch konventionelle radikalische Polymerisationen oder kontrollierte radikalische Polymerisationen, beispielsweise anionische Polymerisation, RAFT-, NMRP- oder ATRP-Polymerisation. Die Polymere bzw. Oligomere können durch Copolymerisation der monomeren Komponenten unter Verwendung der üblichen Polymerisationsinitiatoren sowie gegebenenfalls von Reglern hergestellt werden, wobei bei den üblichen Temperaturen beispielsweise in Substanz, in Emulsion, z.B. in Wasser oder flüssigen Kohlenwasserstoffen, oder in Lösung polymerisiert werden kann. Bevorzugt werden die Poly(meth)acrylate durch Polymerisation in Lösungsmitteln, besonders bevorzugt in Lösungsmitteln mit einer Siedetemperatur im Bereich von 50 bis 150 °C, besonders bevorzugt im Bereich von 60 bis 120 °C, unter Verwendung der üblichen Mengen an Polymerisationsinitiatoren, hergestellt, wobei die Polymerisationsinitiatoren der Monomerzusammensetzung im Allgemeinen in einem Anteil von etwa 0,01 bis 5 %, insbesondere von 0,1 bis 2 % zugesetzt werden, bezogen auf die Masse der Monomerzusammensetzung.

Geeignete Polymerisationsinitiatoren sind beispielsweise Radikalquellen wie Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat oder Benzpinacol. Besonders bevorzugt wird als radikalischer Polymerisationsinitiator 2,2'-Azobis(2-methylbutyronitril) oder 2,2'-Azobis(2-methylpropionitril) verwendet. Als Lösungsmittel kommen insbesondere Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine mit einer Siedetemperatur im Bereich von 60 bis 120 °C in Frage. Insbesondere können Ketone, wie beispielsweise Aceton, Methylethylketon und Methylisobutylketon, und Ester, wie beispielsweise Essigsäureethylester, sowie Mischungen dieser Lösungsmittel eingesetzt werden.

Die erfindungsgemäß einzusetzenden Poly(meth)acrylat-Verbindungen sind mit anderen Worten herstellbar durch Polymerisation, insbesondere radikalische Polymerisation, einer Monomerzusammensetzung umfassend ein oder mehrere polymerisierbare (Meth)acrylatVerbindungen, bevorzugt monofunktionelle (Meth)acrylat-Verbindungen. In Übereinstimmung mit dem fachmännischen Verständnis und dem üblichen Vorgehen im Bereich der Technik ist es zielführend, polymere Verbindungen wie die Poly(meth)acrylat-Verbindungen in dieser Weise über das Herstellungsverfahren beziehungsweise die zur Herstellung verwendeten Ausgangsmaterialien zu definierten, da es unmöglich ist, die entsprechenden Materialien anders sinnvoll zu definieren. Bevorzugt ist insoweit, dass der kombinierte Massenanteil der einen oder der mehrere polymerisierbaren (Meth)acrylat-Verbindungen in der Monomerzusammensetzung 80 % oder mehr, bevorzugt 90 % oder mehr, besonders bevorzugt 95 % oder mehr, ganz besonders bevorzugt 98 % oder mehr, beträgt, bezogen auf die Masse der Monomerzusammensetzung.

Die Erfinder haben dabei bevorzugte Polymerisationsgrade identifiziert, die zum Erhalt besonders vorteilhafter Eigenschaften eingestellt werden können. Bevorzugt ist nämlich eine Haftklebemasse, wobei die eine oder die mehreren Poly(meth)acrylat-Verbindungen ein gewichtsmittleres Molekulargewicht M_{w}, gemessen mittels GPC, von 300000 g/mol oder mehr, bevorzugt von 400000 g/mol oder mehr, besonders bevorzugt von 500000 g/mol oder mehr, aufweist. Die Bestimmung des gewichtsmittleren Molekulargewichts erfolgt dabei mittels Gelpermeationschromatographie (GPC) an 100 mL klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule vom Typ PSS-SDV, 10 µm, ID 8,0 mm x 50 mm verwendet. Zur Auftrennung werden Säulen des Typs PSS-SDV, 5 µm, 10³ Ä (SN9090201) sowie 5 µm, 10² Ä (SN9090200) mit jeweils ID 8,0 mm x 300 mm eingesetzt (Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

Nach Einschätzung der Erfinder eignen sich prinzipiell im Wesentlichen alle Poly(meth)acrylatVerbindungen für den Einsatz in der (Meth)acrylat-Matrix der UV-aushärtbaren Haftklebemassen. Allerdings ist es den Erfindern in eigenen Experimenten gelungen, besonders geeignete Poly(meth)acrylat-Verbindungen zu identifizieren, mit denen sich besonders leistungsstarke reaktive Haftklebeelemente erhalten lassen, insbesondere hinsichtlich der Klebkraft und der Adhäsion am Schaumträger. Diese bevorzugten Poly(meth)acrylat-Verbindungen lassen sich über die zur Herstellung verwendete Monomerzusammensetzung definieren. Bevorzugt ist nämlich ein erfindungsgemäßes reaktives Haftklebeelement, wobei die eine oder die mehrere polymerisierbare (Meth)acrylat-Verbindungen der Monomerzusammensetzung ausgewählt sind aus der Gruppe bestehend aus monofunktionellen (Meth)acrylaten, bevorzugt monofunktionellen Acrylaten, wobei die eine oder die mehrere polymerisierbare (Meth)acrylat-Verbindungen bevorzugt ausgewählt sind aus der Gruppe bestehend aus Methyl(meth)acrylat, Butyl(meth)acrylat, und Phenoxyethyl(meth)acrylat, bevorzugt Methylacrylat, Butylacrylat und Phenoxyethylacrylat.

Bevorzugt ist zusätzlich oder alternativ ein erfindungsgemäßes reaktives Haftklebeelement, wobei die Monomerzusammensetzung zwei oder mehr, bevorzugt drei oder mehr, polymerisierbare (Meth)acrylat-Verbindungen umfasst.

Die UV-aushärtbaren Haftklebemassen umfassen neben den Poly(meth)acrylat-Verbindungen auch eine oder mehrere polymerisierbare Epoxidverbindungen. In Übereinstimmung mit dem fachmännischen Verständnis sind "Epoxidverbindungen" solche Verbindungen, die zumindest eine Oxiran-Gruppe tragen. Sie können beispielsweise aromatischer, aliphatischer oder cycloaliphatischer Natur sein. Polymerisierbare Epoxidverbindungen können sowohl monomere als auch oligomere beziehungsweise polymere Epoxidverbindungen umfassen, wobei die oligomere beziehungsweise polymere Epoxidverbindungen insbesondere Oligomere bzw. Polymere von monomeren polymerisierbare Epoxidverbindungen sind, und werden teilweise auch als Epoxidharze bzw. Reaktivharze bezeichnet. Polymerisierbare Epoxidverbindungen weisen häufig im Durchschnitt wenigstens zwei Epoxidgruppen pro Molekül, vorzugsweise mehr als zwei Epoxidgruppen pro Molekül, auf. Der Ausdruck "polymerisierbar" bezieht sich hierbei in Übereinstimmung mit dem fachmännischen Verständnis auf die Fähigkeit dieser Verbindungen, ggf. nach geeigneter Aktivierung, eine Polymerisationsreaktion einzugehen. Im Falle der polymerisierbaren Epoxidverbindungen wird die Polymerisierbarkeit insbesondere durch die Epoxid-Gruppen ermöglicht. Bevorzugt ist ein erfindungsgemäßes reaktives Haftklebeelement, wobei die eine oder die mehrere polymerisierbare Epoxidverbindungen ausgewählt sind aus der Gruppe bestehend aus difunktionellen Epoxidverbindungen.

Auch hinsichtlich der polymerisierbaren Epoxidverbindungen ist es den Erfindern gelungen, bevorzugte Verbindungen zu identifizieren, mit denen sich besonders leistungsstarke reaktive Haftklebeelemente erhalten lassen, insbesondere hinsichtlich der Klebkraft, der Adhäsion am Schaumträger und des Aushärtungsverhaltens. Bevorzugt ist nämlich ein erfindungsgemäßes reaktives Haftklebeelement, wobei die eine oder die mehrere polymerisierbare Epoxidverbindungen ausgewählt sind aus der Gruppe bestehend aus aromatischen und cycloaliphatischen Epoxidverbindungen, wobei die eine oder die mehrere polymerisierbare Epoxidverbindungen bevorzugt ausgewählt sind aus der Gruppe bestehend aus 3,4-Epoxycyclohexyl-methyl-3,4-epoxycyclohexanecarboxylat und Diglycidylethern, insbesondere Bisphenol-A-Epichlorhydrinharz, sowie Oligomeren dieser Verbindungen.

Nach Erkenntnis der Erfinder ergeben sich besonders bevorzugte Haftklebemassen dann, wenn Epoxidverbindungen miteinander kombiniert werden. Bevorzugt ist nämlich ein erfindungsgemäßes reaktives Haftklebeelement, wobei die erste UV-aushärtbare Haftklebemasse und die zweite UV-aushärtbare Haftklebemasse unabhängig voneinander zwei oder mehr, bevorzugt drei oder mehr, polymerisierbare Epoxidverbindungen umfassen.

Als Photoinitiatoren können prinzipiell sämtliche dem Fachmann zu diesem Zweck aus dem Stand der Technik bekannten Photoinitiatoren eingesetzt werden. Der Fachmann wählt beispielsweise unter den kommerziell erhältlichen Photoinitiatoren ein oder mehrere Verbindungen aus, ggf. in Kombination mit Sensitizern oder anderen Zusätzen, die zu den von ihm angestrebten Anwendungseigenschaften passen, wobei der Fachmann insbesondere die Aktivierungswellenlänge der Photoinitiatoren bzw. des Photoinitiatorsystems auf die gewünschte Wellenlänge abstimmt.

Die Erfinder haben in eigenen Experimenten gefunden, dass die Dimensionierung des reaktiven Haftklebebandes einen Einfluss auf die klebtechnischen Eigenschaften hat. Insoweit haben die Erfinder gefunden, dass die Dicke des Schaumträgers, d.h. die Ausdehnung orthogonal zu der flächigen Ausdehnung des Klebeelements, nicht zu groß gewählt werden sollte. Ebenfalls wurde als vorteilhaft identifiziert, wenn die Klebeschichten eine geringere kombinierte Dicke aufweisen, als die Trägerschicht, bzw. als der Schaumträger, wenn dieser in bevorzugter Weise im Wesentlichen die Trägerschicht bildet. Zusammen mit den als günstig identifizierten Dicken der Klebeschichten resultiert daraus ein bevorzugter Dickenbereich für die Gesamtdicke.

Bevorzugt ist ein erfindungsgemäßes reaktives Haftklebeelement, wobei die Trägerschicht und/oder der Schaumträger, insbesondere sowohl die Trägerschicht als auch der Schaumträger, eine mittlere Dicke im Bereich von 150 bis 550 µm, bevorzugt im Bereich von 200 bis 500 µm, besonders bevorzugt im Bereich von 250 bis 460 µm, ganz besonders bevorzugt im Bereich von 280 bis 420 µm, aufweist.

Bevorzugt ist zusätzlich oder alternativ ein erfindungsgemäßes reaktives Haftklebeelement, wobei die erste Haftklebeschicht und/oder die zweite Haftklebeschicht eine mittlere Dicke im Bereich von 20 bis 80 µm, bevorzugt im Bereich von 30 bis 70 µm, besonders bevorzugt im Bereich von 40 bis 60 µm, ganz besonders bevorzugt im Bereich von 45 bis 55 µm, aufweist.

Bevorzugt ist ebenfalls zusätzlich oder alternativ ein erfindungsgemäßes reaktives Haftklebeelement, wobei die erste Haftklebeschicht und die zweite Haftklebeschicht sich hinsichtlich der mittleren Dicke um weniger als 20 %, bevorzugt weniger als 10 %, ganz besonders bevorzugt weniger als 5 %, insbesondere bevorzugt weniger als 1 %, unterscheiden.

Bevorzugt ist wiederum zusätzlich oder alternativ ein erfindungsgemäßes reaktives Haftklebeelement, wobei das reaktive Haftklebeelement, eine mittlere Dicke im Bereich von 200 bis 600 µm, bevorzugt im Bereich von 250 bis 550 µm, besonders bevorzugt im Bereich von 300 bis 500 µm, ganz besonders bevorzugt im Bereich von 350 bis 450 µm, aufweist.

Besonders bevorzugt ist zusätzlich oder alternativ ein erfindungsgemäßes reaktives Haftklebeelement, wobei das Verhältnis der kombinierten mittleren Dicke der ersten Haftklebeschicht und der zweiten Haftklebeschicht geteilt durch die mittlere Dicke der Trägerschicht oder des Schaumträgers, bevorzugt sowohl der Trägerschicht als auch des Schaumträgers, im Bereich von 0,15 bis 0,6, bevorzugt im Bereich von 0,2 bis 0,5, besonders bevorzugt im Bereich von 0,25 bis 0,4 liegt.

Erfindungsgemäße reaktive Haftklebebänder lassen sich in vorteilhafterweise besonders effizient und unter Verwendung von im Bereich der Technik etablierten Methoden herstellen. Insbesondere schlagen die Erfinder vor, dass die Klebeschichten zunächst mittels einer Lösungsmittelbeschichtung auf einem Liner ausgeformt werden können, wobei es sich beispielsweise um einen Liner handeln kann, welcher später im erfindungsgemäßen reaktiven Haftklebeelement als Trennschicht fungiert. Hierbei wird die Klebeschicht durch Trocknung bei erhöhten Temperaturen erhalten, beispielsweise bei 100 °C. Die so hergestellten Klebeschichten können anschließend beidseitig auf die Oberfläche des Schaumträgers zukaschiert werden, um das erfindungsgemäße reaktive Haftklebeband auszubilden. Dies hat den Vorteil, dass dadurch auch der Einsatz von temperaturempfindlicheren Schäumen, beispielsweise aus Polyethylen, effizient und ohne Leistungseinbußen möglich ist.

Die Erfindung betrifft zudem ein Verfahren zur Verbindung von zwei oder mehr Komponenten, insbesondere zur Befestigung eines Displays an einem Gehäuse, mit einem erfindungsgemäßen reaktiven Haftklebeelement, umfassend die Verfahrensschritte:
a) Herstellen oder Bereitstellen eines erfindungsgemäßen reaktiven Haftklebeelements,
b) Initiieren der Aushärtung der ersten UV-aushärtbaren Haftklebemasse durch Aktivierung des einen oder der mehreren Photoinitiatoren in der ersten UV-aushärtbaren Haftklebemasse mittels UV-Strahlung,
c) Initiieren der Aushärtung der zweiten UV-aushärtbaren Haftklebemasse durch Aktivierung des einen oder der mehreren Photoinitiatoren in der zweiten UV-aushärtbaren Haftklebemasse mittels UV-Strahlung, und
d) Verbinden einer ersten Komponente und einer zweiten Komponente mit dem reaktiven Haftklebeband unter Aushärtung der ersten UV-aushärtbaren Haftklebemasse und der zweiten UV-aushärtbaren Haftklebemasse zum Erhalt eines verklebten Substrates.

Bevorzugt ist dabei ein erfindungsgemäßes Verfahren, wobei die erste Komponente ein Gehäuse für ein elektronische Gerät ist, und/oder wobei die zweite Komponente ein Display für ein elektronische Gerät ist.

Offenbart wird abschließend auch die Verwendung eines erfindungsgemäßen reaktiven Haftklebeelements, bei der Verklebung von zwei oder mehr Komponenten durch Aushärtung der ersten UV-aushärtbaren Haftklebemasse und der zweiten UV-aushärtbaren Haftklebemasse zur Erzeugung einer mechanisch belastbaren stoffschlüssigen Verbindung mit verbesserten mechanischen Dämpfungseigenschaften und Verbesserung der Trennbarkeit des ausgehärteten reaktiven Haftklebeelements orthogonal zur Dickenrichtung.

Die Erfindung betrifft zudem ein verklebtes Substrat, insbesondere elektronisches Endgerät, hergestellt oder herstellbar mit dem erfindungsgemäßen Verfahren oder durch die offenbarte Verwendung, umfassend zumindest zwischen einer ersten Komponente und einer zweiten Komponente, bevorzugt zwischen einem Gehäuse und einem im Gehäuse angeordneten Display, einen Klebeverbund, umfassend:
i.1 eine stoffschlüssig mit der ersten Komponente verbundene erste ausgehärtete Klebeschicht, hergestellt oder herstellbar durch Aushärtung der ersten UV-aushärtbaren Haftklebemasse,
ii.2 eine stoffschlüssig mit der zweiten Komponente verbundene zweite ausgehärtete Klebeschicht, hergestellt oder herstellbar durch Aushärtung der zweiten UV-aushärtbaren Haftklebemasse, und
iii.3 eine stoffschlüssig mit der ersten ausgehärteten Klebeschicht und der zweiten ausgehärteten Klebeschicht verbundene Trägerschicht, wobei die Trägerschicht einen Schaumträger umfasst, wobei der Schaumträger ein oder mehrere Polyolefine umfasst.

Entsprechende verklebte Substrate sind unter Einsatz erfindungsgemäßer reaktiver Haftklebebänder herstellbar, insbesondere nach dem erfindungsgemäßen Verfahren, und weisen eine vorteilhaft beständige Verklebung zwischen den Komponenten auf. Durch die Anordnung der dämpfenden Schicht des Schaumträgers zwischen den beiden durch Aushärtung erzeugten ausgehärteten Klebeschichten werden vorteilhafte mechanische Eigenschaften der Verklebung erreicht, die in synergistischer Weise zu einer langen Haltbarkeit der Verklebung beitragen.

Die Erfindung betrifft auch ein Verfahren zum Auftrennen eines erfindungsgemäßen verklebten Substrates, umfassend den Verfahrensschritt:
a) mechanisches Auftrennen der Verklebung des verklebten Substrats entlang der Trägerschicht, wobei das mechanische Auftrennen der Verklebung bevorzugt mit einem Trennwerkzeug erfolgt, besonders bevorzugt mit einem Draht.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine vereinfachte schematische Querschnittsdarstellung durch ein erfindungsgemäßes reaktives Haftklebeelement in einer bevorzugten Ausführungsform; und
- Fig. 2: eine vereinfachte schematische Querschnittsdarstellung durch ein erfindungsgemäßes verklebtes Substrat bei Auftrennung der Verklebung mit einem Schneidwerkzeug.

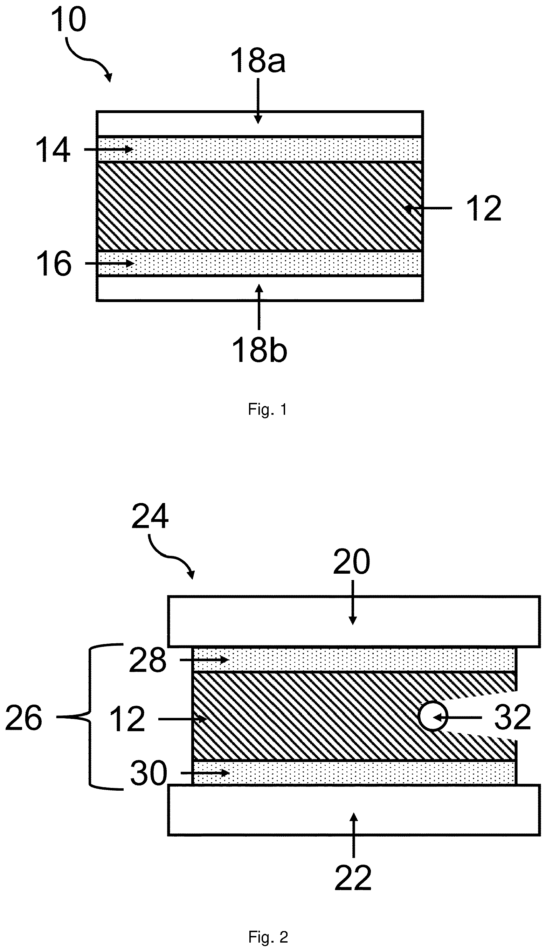

Fig. 1 zeigt eine vereinfachte schematische Querschnittsdarstellung durch ein erfindungsgemäßes reaktives Haftklebeelement 10 in einer bevorzugten Ausführungsform. Dieses reaktive Haftklebeelement 10 umfasst eine Trägerschicht 12, welche im gezeigten Beispiel vollständig aus einem Polyethylenschaum ausgebildet ist. Der Schaumträger aus Polyethylen und damit die Trägerschicht 12 besitzt eine mittlere Dicke von etwa 300 µm, ein Flächengewicht von etwa 120 g/m² und eine Dichte von etwa 400 kg/m³ sowie ein Stauchhärte von etwa 590 kPa.

Auf der Trägerschicht sind eine erste Klebeschicht (14) und eine zweite Klebeschicht (16) angeordnet, die jeweils mit einer Trennschicht (18a, 18b) aus PET (50 µm oben bzw. 75 µm unten) bedeckt sind. Die erste Klebeschicht (14) und die zweite Klebeschicht (16) sind im gezeigten Beispiel der Fig. 1 als im Wesentlichen identische Klebeschichten mit einer mittleren Dicke von jeweils 50 µm ausgeführt und bestehend jeweils vollständig aus der gleichen UV-aushärtbaren Haftklebemasse.

Als UV-aushärtbare Haftklebemasse wird im Beispiel der Fig. 1 eine in den Augen der Erfinder besonders vorteilhafte UV-aushärtbare Haftklebemasse eingesetzt, die auf dem spezifischen Schaumträger eine ausgezeichnete Adhäsion zeigt, insbesondere auch bei erhöhten Temperaturen von beispielsweise 70 °C, und in Kombination mit dem Schaumträger in einem reaktiven Haftklebeelement resultiert, welches bei Bedarf im Wesentlichen rückstandsfrei von einem Substrat wieder abgezogen werden kann.

Durch Aushärtung der UV-aushärtbaren Klebemassen der ersten Klebeschicht 14 und der zweiten Klebeschicht 16 beim Verbinden der ersten Komponente 20 und der zweiten Komponente 22 eines verklebten Substrates 24 wird ein starker und langlebiger Klebeverbund 26 erhalten, der am Ende der Lebensdauer des verklebten Substrates 24 jedoch in effizienter Weise mit einem Trennwerkzeug 32, beispielsweise einem Draht, auf Höhe des zwischen der ersten ausgehärteten Klebeschicht 28 und der zweiten ausgehärtete Klebeschicht 30 angeordneten Trägerschicht 12 aufgetrennt werden kann, um die Komponenten wieder zu separieren, wie es in Fig. 2 gezeigt ist.

Die entsprechende UV-aushärtbare Haftklebemasse umfasst dabei in Gewichtsteilen:
- 70 Teile: Polymethacrylat, hergestellt durch Polymerisation einer Monomerzusammensetzung bestehend bezogen auf die Masse aus ca. 51 % Butylacrylat, 39,5 % Methylacrylat, 9,5 % Epoxycyclohexylmethylmethacrylat,
- 5 Teile: Destilliertes difunktionelles Bisphenol-A/Epichlorhydrin Flüssigepoxid mit einem Gewicht pro Epoxid von 185 bis 192 g/eq mit einer Viskosität bei 25 °C von 10 bis 12 Pa*s (Handelsname: Epikote 828 LVEL, Firma: Hexion).
- 14 Teile: Festes Bisphenol-A-basiertes Epoxidharz mit einer Erweichungstemperatur von 82-90 °C. (Handelsname: Araldite GT 7072, Firma: Huntsman)
- 10 Teile: 3,4-Epoxycyclohexylmethyl 3,4-epoxycyclohexanecarboxylat; CAS 2386-87-0, Flüssiges cycloaliphatisches Diepoxid mit einem Schmelzpunkt von -37 °C und einer Viskosität bei 23°C von 0,25 Pa*s (Handelsname: Uvacure 1500, Firma: Dow)
- 1,5 Teile: Triarylsulfonium hexafluorophosphat, gemischte Salze 50% in Propylencarbonat.

Die UV-aushärtbare Haftklebemasse und die entsprechenden Klebeschichten wurden analog zu dem in der WO 2023274875 A1 offenbarten Verfahren hergestellt und anschließend zum Polyethylenschaum zukaschiert.

Von den Erfindern wurden die klebtechnischen Eigenschaften im statischen Schertest gemäß ASTM D3654M-06 aus 2019 für unterschiedliche Schaumträger durchgeführt, die jeweils beidseitig mit einer Haftklebemasse der vorstehenden Zusammensetzung beschichtet wurde, wobei die mittlere Dicke der zwei Klebeschichten jeweils etwa 50 µm betrug.

Beim statischen Schertest werden zwei Prüfsubstrate aus Stahl mit dem reaktiven Haftklebeband 10 verklebt und mittels Gewicht auf Scherung belastet (50 N/312,5 mm). Der Test wird bei 70 °C durchgeführt und es wird die Haltezeit (max. 30000 min) bis zum Versagen in Minuten aufgenommen, sowie ggf. das Bruchbild bewertet. Die Ergebnisse sind in der Tabelle 1 zusammengefasst.

| Nr. | Schaumträger | | Statischer Schertest bei 70 °C | |
|---|---|---|---|---|
| | Material | Dicke / µm | Haltezeit / min | Bruchbild |
| 1 | Polyethylen | 300 | > 30000 | Adhesionsbruch zu Stahlsubstrat |
| 2 | Polyurethan | 300 | < 1 | Verankerungsbruch zu Schaum |
| 3 | Polyurethan | 300 | < 1 | Verankerungsbruch zu Schaum |
| 4 | Polyurethan | 790 | < 1 | Verankerungsbruch zu Schaum |
| 5 | Acrylat | 200 | 4 | Verankerungsbruch zu Schaum |
| 6 | Acrylat | 400 | 2 | Verankerungsbruch zu Schaum |
| 7 | Acrylat | 100 | 17 | Verankerungsbruch zu Schaum |

Die vorstehenden Ergebnisse verdeutlichen die überraschende Eignung der erfindungsgemäß einzusetzenden Haftklebemasse für Polyolefinschäume, insbesondere Polyethylenschaum, und verdeutlichen die vorteilhaften klebtechnischen Eigenschaften erfindungsgemäßer reaktiver Haftklebebänder.

### Bezugszeichenliste

- 10: Reaktives Haftklebeelement
- 12: Trägerschicht
- 14: erste Klebeschicht
- 16: zweite Klebeschicht
- 18: Trennschicht
- 20: erste Komponente
- 22: zweite Komponente
- 24: verklebtes Substrat
- 26: Klebeverbund
- 28: erste ausgehärtete Klebeschicht
- 30: zweite ausgehärtete Klebeschicht
- 32: Trennwerkzeug

## Patentansprüche

1. Reaktives Haftklebeelement (10), umfassend
i) eine Trägerschicht (12),
ii) eine auf der Trägerschicht (12) angeordnete erste Klebeschicht (14), wobei die erste Klebeschicht (14) eine erste UV-aushärtbare Haftklebemasse umfasst, und
iii) eine auf der von der ersten Klebeschicht (14) abgewandten Seite der Trägerschicht (12) angeordnete zweite Klebeschicht (16), wobei die zweite Klebeschicht (16) eine zweite UV-aushärtbare Haftklebemasse umfasst,
wobei die erste UV-aushärtbare Haftklebemasse und die zweite UV-aushärtbare Haftklebemasse unabhängig voneinander bezogen auf die Masse der jeweiligen Haftklebemasse umfassen:
x) eine oder mehrere Poly(meth)acrylat-Verbindungen in einem kombinierten Massenanteil im Bereich von 35 bis 85 %,
y) eine oder mehrere polymerisierbare Epoxidverbindungen in einem kombinierten Massenanteil im Bereich von 10 bis 50 %, und
z) einen oder mehrere Photoinitatoren in einem kombinierten Massenanteil im Bereich von 0,1 bis 5 %,
wobei die Trägerschicht (12) einen Schaumträger umfasst, wobei der Schaumträger ein oder mehrere Polyolefine umfasst.

2. Reaktives Haftklebeelement (10) nach Anspruch 1, wobei das eine oder die mehreren Polyolefine ausgewählt sind aus der Gruppe bestehend aus Polyethylen, Polypropylen, Polyisobutylen, Polybutylen und Polymethylpenten.

3. Reaktives Haftklebeelement (10) nach einem der Ansprüche 1 oder 2, wobei das eine oder die mehreren Polyolefine ausgewählt sind aus der Gruppe bestehend aus Polyethylen.

4. Reaktives Haftklebeelement (10) nach einem der Ansprüche 1 bis 3, wobei der Schaumträger eine Dichte im Bereich von 200 bis 600 kg/m³ aufweist.

5. Reaktives Haftklebeelement (10) nach einem der Ansprüche 1 bis 4, wobei der Schaumträger eine Stauchhärte im Bereich von 300 bis 900 kPa aufweist, bestimmt gemäß DIN 53577-1988-12 bei einer Verformung von 25 %.

6. Reaktives Haftklebeelement (10) nach einem der Ansprüche 1 bis 5, wobei der Schaumträger ein Flächengewicht im Bereich von 50 bis 250 g/m², aufweist.

7. Reaktives Haftklebeelement (10) nach einem der Ansprüche 1 bis 6, wobei der Schaumträger ein geschlossenporiger Schaum ist.

8. Reaktives Haftklebeelement (10) nach einem der Ansprüche 1 bis 7, wobei die erste UV-aushärtbare Haftklebemasse und die zweite UV-aushärtbare Haftklebemasse unabhängig voneinander bezogen auf die Masse der jeweiligen Haftklebemasse umfassen:
x.b) eine oder mehrere Poly(meth)Acrylat-Verbindungen in einem kombinierten Massenanteil im Bereich von 50 bis 80 %.

9. Reaktives Haftklebeelement (10) nach einem der Ansprüche 1 bis 8, wobei die eine oder die mehrere polymerisierbare Poly(meth)acrylat-Verbindungen herstellbar sind durch Polymerisation einer Monomerzusammensetzung umfassend ein oder mehrere monofunktionelle (Meth)acrylat-Verbindungen.

10. Reaktives Haftklebeelement (10) nach einem der Ansprüche 1 bis 9, wobei die erste UV-aushärtbare Haftklebemasse und die zweite UV-aushärtbare Haftklebemasse unabhängig voneinander bezogen auf die Masse der jeweiligen Haftklebemasse umfassen:
y.b) eine oder mehrere polymerisierbare Epoxidverbindungen in einem kombinierten Massenanteil im Bereich von 15 bis 45 %.

11. Reaktives Haftklebeelement (10) nach einem der Ansprüche 1 bis 10, wobei die eine oder die mehrere polymerisierbare Epoxidverbindungen ausgewählt sind aus der Gruppe bestehend aus difunktionellen Epoxidverbindungen.

12. Reaktives Haftklebeelement (10) nach einem der Ansprüche 1 bis 11, wobei die Trägerschicht (12) eine mittlere Dicke im Bereich von 150 bis 550 µm aufweist.

13. Reaktives Haftklebeelement (10) nach einem der Ansprüche 1 bis 12, wobei das Verhältnis der kombinierten mittleren Dicke der ersten Haftklebeschicht (14) und der zweiten Haftklebeschicht (16) geteilt durch die mittlere Dicke der Trägerschicht (12) im Bereich von 0,15 bis 0,6 liegt.

14. Verfahren zur Verbindung von zwei oder mehr Komponenten mit einem reaktiven Haftklebeelement (10) nach einem der Ansprüche 1 bis 13, umfassend die Verfahrensschritte:
a) Herstellen oder Bereitstellen des reaktiven Haftklebeelements (10),
b) Initiieren der Aushärtung der ersten UV-aushärtbaren Haftklebemasse durch Aktivierung des einen oder der mehreren Photoinitiatoren in der ersten UV-aushärtbaren Haftklebemasse mittels UV-Strahlung,
c) Initiieren der Aushärtung der zweiten UV-aushärtbaren Haftklebemasse durch Aktivierung des einen oder der mehreren Photoinitiatoren in der zweiten UV-aushärtbaren Haftklebemasse mittels UV-Strahlung, und
d) Verbinden einer ersten Komponente (20) und einer zweiten Komponente (22) mit dem reaktiven Haftklebeband (10) unter Aushärtung der ersten UV-aushärtbaren Haftklebemasse und der zweiten UV-aushärtbaren Haftklebemasse zum Erhalt eines verklebten Substrates (24).

15. Verklebtes Substrat (24) hergestellt oder herstellbar mit dem Verfahren nach Anspruch 14, umfassend zumindest zwischen einer ersten Komponente (20) und einer zweiten Komponente (22) einen Klebeverbund (26), umfassend:
i.1 eine stoffschlüssig mit der ersten Komponente (20) verbundene erste ausgehärtete Klebeschicht (28), hergestellt oder herstellbar durch Aushärtung der ersten UV-aushärtbaren Haftklebemasse,
ii.2 eine stoffschlüssig mit der zweiten Komponente (22) verbundene zweite ausgehärtete Klebeschicht (30), hergestellt oder herstellbar durch Aushärtung der zweiten UV-aushärtbaren Haftklebemasse, und
iii.3 eine stoffschlüssig mit der ersten ausgehärteten Klebeschicht (28) und der zweiten ausgehärteten Klebeschicht (30) verbundene Trägerschicht (12), wobei die Trägerschicht (12) einen Schaumträger umfasst, wobei der Schaumträger ein oder mehrere Polyolefine umfasst.

16. Verfahren zum Auftrennen eines verklebten Substrates (24) nach Anspruch 15, umfassend den Verfahrensschritt:
a) mechanisches Auftrennen der Verklebung des verklebten Substrats (24) entlang der Trägerschicht (12).
